(19) Europäisches Patentamt
European Patent Office
Office européen des brevets

(11) EP 4 112 407 A1

(12) EUROPEAN PATENT APPLICATION

(43) Date of publication:
04.01.2023 Bulletin 2023/01

(21) Application number: 22181549.1

(22) Date of filing: 28.06.2022

(51) International Patent Classification (IPC):
B60W 30/12 (2020.01)      B60W 30/14 (2006.01)
B60W 30/18 (2012.01)      B60W 50/14 (2020.01)

(52) Cooperative Patent Classification (CPC):
B60W 30/18145; B60W 30/12; B60W 30/143;
B60W 50/14; B60W 2050/0088; B60W 2540/30;
B60W 2552/30; B60W 2552/40; B60W 2552/53;
B60W 2556/40; B60W 2556/50; B60W 2710/207;
B60W 2720/10; B60W 2756/10

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.06.2021 US 202117360721

(71) Applicant: Volvo Car Corporation
40531 Göteborg (SE)

(72) Inventors:
• Gunnarsson, Daniel
40531 Göteborg (SE)
• Muppirisetty, Leela Srikar
40531 Göteborg (SE)
• Gawande, Saurabh
40531 Göteborg (SE)

(74) Representative: Maiwald GmbH
Engineering
Elisenhof
Elisenstrasse 3
80335 München (DE)

(54) **SYSTEM AND METHOD FOR DETERMINING A VEHICLE SAFE OPERATIONAL PROFILE FOR TRAVERSING A CURVE**

(57) The invention relates to systems and computer-implemented methods that facilitate dynamic curve speed control adaptive to road conditions. A system (100) comprises a processor (120) that executes computer executable components stored in memory. The computer executable components comprise a curvature component (140), a road condition component (150), and a safety component (160). The curvature component generates composite curvature data for a curve of a road preceding a vehicle (210) using digital map data and lane marker data. The road condition component generates friction data for a surface of the road using sensor data obtained from an on-board sensor (340) of the vehicle. The safety component determines a safe operational profile for traversing the curve using the composite curvature data and the friction data.

FIG. 13

EP 4 112 407 A1

## Description

FIELD

The subject disclosure generally relates to the automotive field, and more specifically, to dynamic curve speed control adaptive to road conditions.

BACKGROUND

Vehicles can be equipped with advanced driver assist system (ADAS) functionalities that can assist drivers with various aspects of vehicle operation. By way of example, some vehicles can be equipped with ADAS functionalities that can recommend a desired speed and/or dynamically adjust a current vehicle speed in accordance with the desired speed to enhance occupant safety and/or comfort. Some driving situations can involve additional factors for such ADAS functionalities to evaluate in order to determine an appropriate desired speed. A notable example of such driving situations can be when a vehicle traverses curves. Additional factors to be evaluated by ADAS functionalities in determining an appropriate desired speed for traversing a curve can include road curvature and/or vehicle acceleration. Some ADAS functionalities can fail to evaluate road surface conditions in determining an appropriate desired speed for traversing a curve. Other ADAS functionalities can utilize default values for road surface conditions in determining an appropriate desired speed for traversing a curve. Such ADAS functionalities can effectively function when road surface conditions are favorable for traversing a curve. However, such ADAS functionalities can improperly function when road surface conditions can be less than favorable for traversing a curve, such as under adverse weather conditions.

SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, computer-implemented methods, and/or computer program products that facilitate dynamic curve speed control adaptive to road conditions are described.

According to an embodiment, a system can comprise a process that executes computer executable components stored in memory. The computer executable components can comprise a curvature component, a road condition component, and a safety component. The curvature component can generate composite curvature data for a curve of a road preceding a vehicle using digital map data and lane marker data. The road condition component can generate friction data for a surface of the road using sensor data obtained from an on-board sensor of the vehicle. The safety component can determine a safe operational profile for traversing the curve using the composite curvature data and the friction data.

According to another embodiment, a computer-implemented method can comprise generating, by a system operatively coupled to a processor, composite curvature data for a curve of a road preceding a vehicle using digital map data and lane marker data. The computer-implemented method can further comprise generating, by the system, friction data for a surface of the road using sensor data obtained from an on-board sensor of the vehicle. The computer-implemented method can further comprise determining, by the system, a safe operational profile for traversing the curve using the composite curvature data and the friction data.

According to an additional embodiment, a computer program product for modifying electronic control system behavior using distributed machine intelligence can comprise a computer readable storage medium having program instructions embodied therewith. The program instructions are executable by a processor to cause the processor to perform operations. The operations can include generating, by the processor, composite curvature data for a curve of a road preceding a vehicle using digital map data and lane marker data. The operations can further include generating, by the processor, friction data for a surface of the road using sensor data obtained from an on-board sensor of the vehicle. The operations can further include determining, by the processor, a safe operational profile for traversing the curve using the composite curvature data and the friction data.

DESCRIPTION OF THE DRAWINGS

FIG. 1 illustrates a block diagram of an example, non-limiting system that can facilitate dynamic curve speed control adaptive to road conditions, in accordance with one or more embodiments described herein.

FIG. 2 illustrates an example, non-limiting application of dynamic curve speed control adaptive to road conditions, in accordance with one or more embodiments described herein.

FIG. 3 illustrates a block diagram of an example, non-limiting framework that can facilitate dynamic curve speed control adaptive to road conditions, in accordance with one or more embodiments described herein.

FIG. 4 illustrates an example, non-limiting digital map data, in accordance with one or more embodiments described herein.

FIG. 5 illustrates example, non-limiting curve in a road, in accordance with one or more embodiments described herein.

FIG. 6 illustrates example, non-limiting digital map data corresponding to the curve of FIG. 5, in accordance with one or more embodiments described herein.

FIG. 7 illustrates example, non-limiting lane marker data, in accordance with one or more embodiments described herein.

FIG. 8 illustrates an example, non-limiting overview of various frictions and distances that can facilitate dynamic curve speed control adaptive to road conditions, in accordance with one or more embodiments described herein.

FIG. 9 illustrates an example, non-limiting driver style detector, in accordance with one or more embodiments described herein.

FIG. 10 illustrates an example, non-limiting network environment for collaborative road curvature data exchange, in accordance with one or more embodiments described herein.

FIG. 11 illustrates an example, non-limiting dashboard display, in accordance with one or more embodiments described herein.

FIG. 12 illustrates an example, non-limiting heads-up display, in accordance with one or more embodiments described herein.

FIG. 13 illustrates a flow diagram of an example, non-limiting computer-implemented method that can facilitate dynamic curve speed control adaptive to road conditions, in accordance with one or more embodiments described herein.

FIG. 14 is a block diagram of a non-limiting example of an operating environment in which one or more embodiments described herein can be implemented.

FIG. 15 is a block diagram of a non-limiting example of a cloud computing environment in accordance with one or more embodiments described herein.

FIG. 16 is a block diagram of a non-limiting example of abstraction model layers in accordance with one or more embodiments described herein.

DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

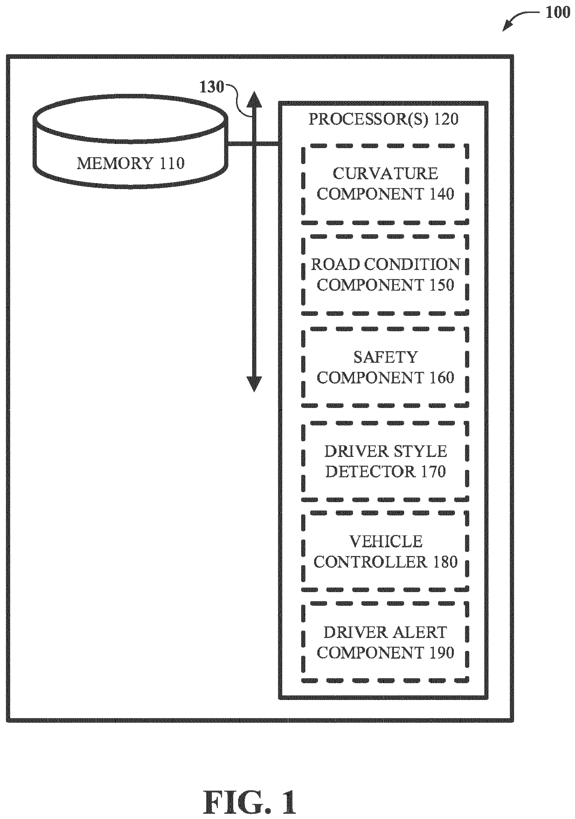

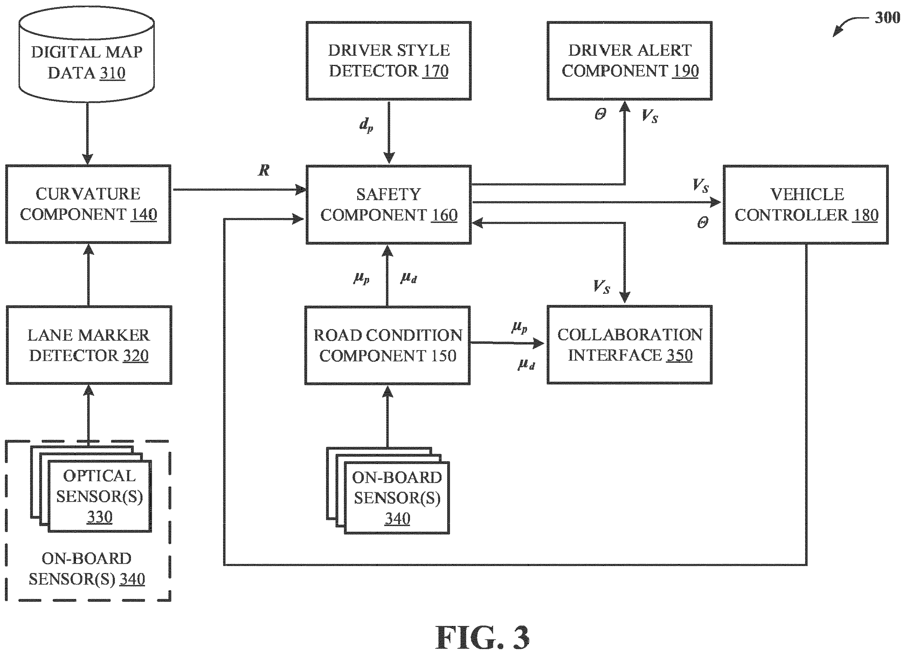

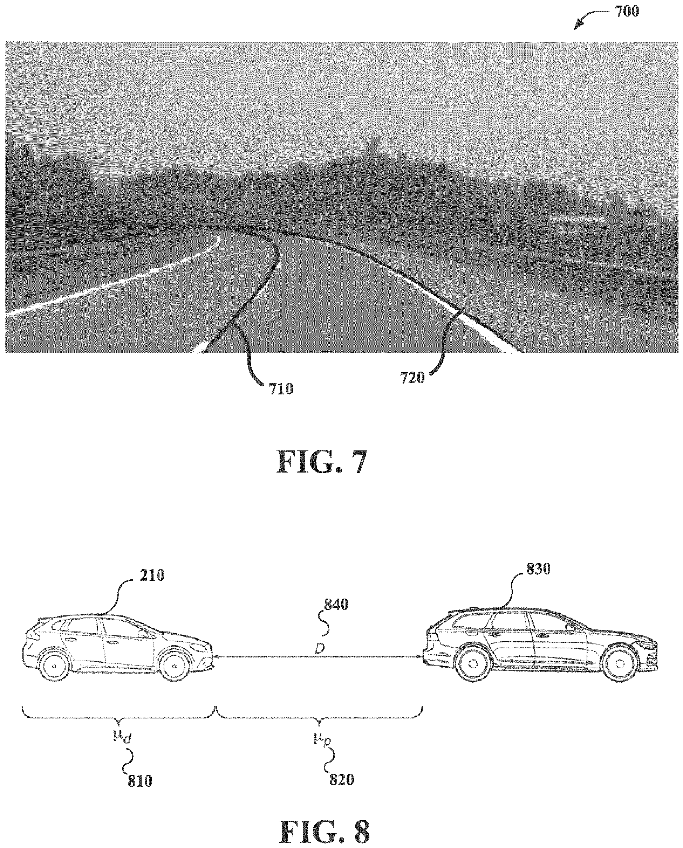

FIG. 1 illustrates a block diagram of an example, non-limiting system 100 that can facilitate dynamic curve speed control adaptive to road conditions, in accordance with one or more embodiments described herein. System 100 includes memory 110 for storing computer-executable components and one or more processors 120 operably coupled via one or more communication busses 130 to memory 110 for executing the computer-executable components stored in memory 110. As shown in FIG. 1, the computer-executable components can include a curvature component 140, a road condition component 150, and a safety component 160. Curvature manager 140 can generate composite curvature data for a curve of a road preceding a vehicle using digital map data and lane marker data, as described in greater detail below with respect to FIG. 3. In an embodiment, curvature manager 140 can obtain the lane marker data from a machine learning model that receives optical data from an optical sensor of the vehicle, as described in greater detail below with respect to FIG. 7.

Road condition component 150 can generate friction data for a surface of the road using sensor data obtained from an on-board sensor of the vehicle, as described in greater detail with reference to FIG. 3. In an embodiment, the friction data can include detected friction data indicative of friction between the vehicle and the surface measured by the on-board sensor. In an embodiment, the on-board sensor can comprise an optical sensor. In an embodiment, the friction data can include predicted friction data that can be estimated for a portion of the surface that precedes the vehicle using optical data received from the optical sensor. In an embodiment, road condition component 150 can further wirelessly transmit the friction data to an external computing device. Safety component 160 can determine a safe operational profile for traversing the curve using the composite curvature data and the friction data, as described in greater detail with reference to FIG. 3. In an embodiment, the safe operational profile can include a safety speed, a safety steering angle, or a combination thereof. In an embodiment, the safe operational profile can vary at different points within the curve.

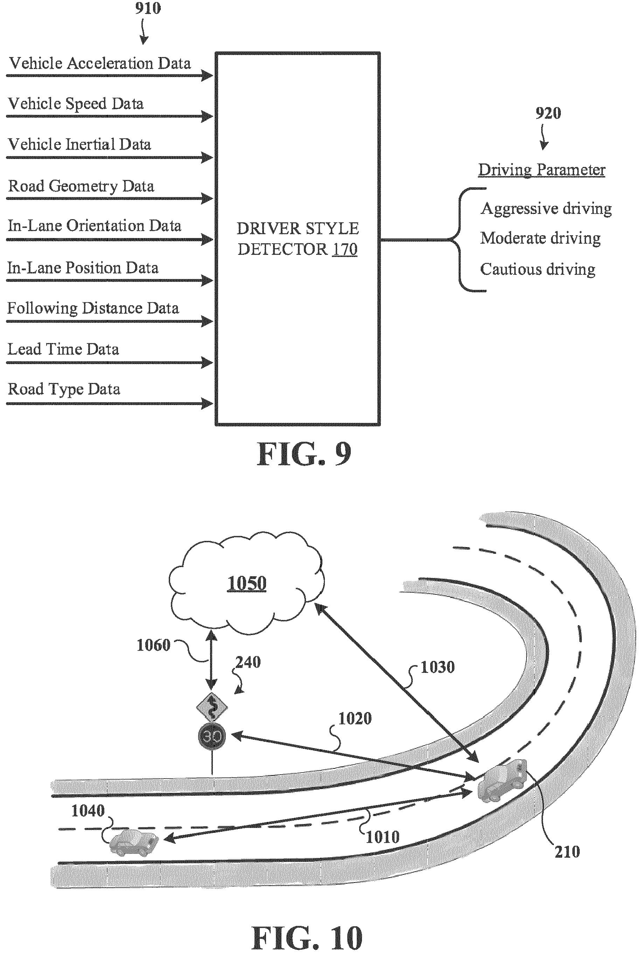

In an embodiment, the computer-executable components stored in memory 110 further can include a driver style component 170, a vehicle controller 180, and/or a driver alert component 190. Driver style component 170 can generate a driving style parameter for a driver of the vehicle using a machine learning model, as described in greater detail with reference to FIG. 9. In an embodiment, safety component 160 can modify the safe operational profile based on the driving style parameter. Vehicle controller 180 can dynamically alter automated operation of the vehicle based on the safe operational profile, as described in greater detail with reference to FIG. 3. Driver alert component 190 can present an indication of the curve and an element of the safe operational profile to a driver of the vehicle, as described in greater detail with reference to FIG. 3. The functionality of the computer-executable components utilized by the embodiments will be covered in greater detail below.

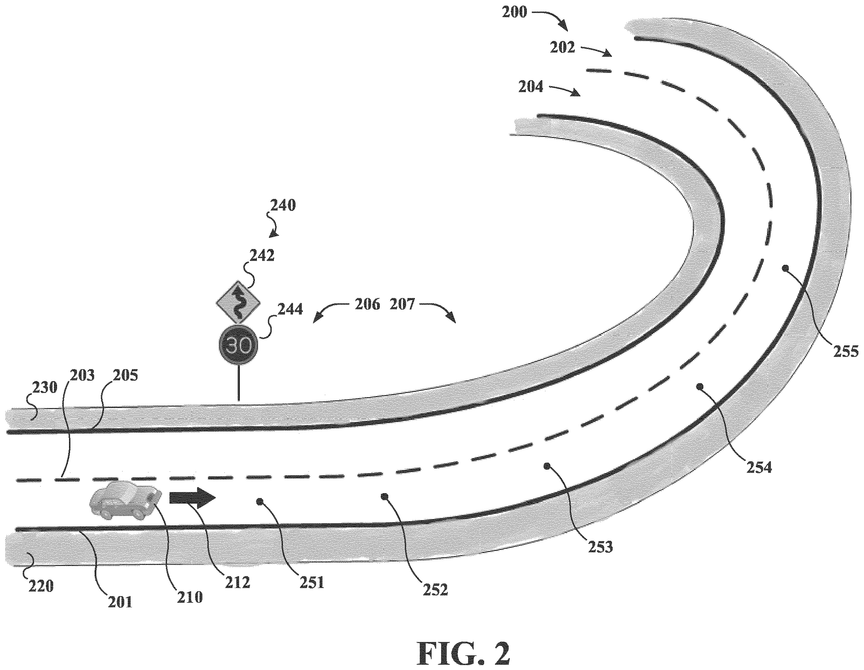

FIG. 2 depicts a vehicle 210 travelling within a lane 202 of a road 200 in direction 212. As shown by FIG. 2, road 200 can comprise a lane marker 201 that can delineate between lane 202 and a shoulder area 220 proximate to road 200. Road 200 can further comprise a lane marker 203 that can delineate between lane 202 and a lane 204 of road 200 proximate to lane 202. A lane marker 205 of road 200 can delineate between lane 204 and a shoulder area 230 proximate to road 200. In FIG. 2, infrastructure 240 can be positioned proximate to a non-curved segment 206 of road 200. Infrastructure 240 can include a sign 242 to notify drivers about a curved segment 207 of road 200 that can be associated with a relatively higher curvature than a curvature associated with non-curved segment 206. Infrastructure 240 can further include a sign 244 to notify drivers about a recommended speed for safely traversing the curved segment 207 of road 200. The recommended speed of sign 244 can be static. As such, the recommended speed of sign 244 can fail to account for dynamic factors that can impact an appropriate speed for safely traversing curved segment 207. Examples of such dynamic factors can include weather conditions associated with curved segment 206, a tread depth associated with a tire of a particular vehicle (e.g., vehicle 210) traversing curved segment 206, and/or other dynamic factors.

FIG. 3 illustrates a block diagram of an example, non-limiting framework 300 that can facilitate dynamic curve speed control adaptive to road conditions, in accordance with one or more embodiments described herein. Vehicle 210 can be equipped with advanced driver assist system (ADAS) functionalities corresponding to framework 300 that can enhance occupant safety and/or comfort while vehicle 210 traverses a curve (e.g., curved segment 206). To that end, safety component 160 of framework 300 can leverage various input modalities to determine a safety operational profile for traversing a curve of a road preceding vehicle 210. Such input modalities can include composite curvature data R that curvature component 140 of framework 300 can generate for the curve.

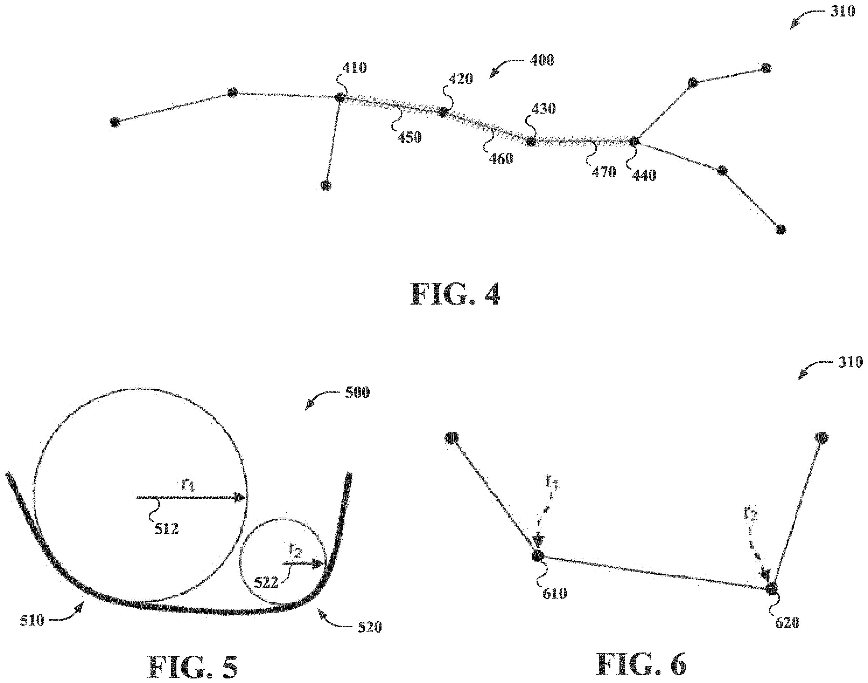

Curvature component 140 can generate the composite curvature data R using digital map data 310 and/or lane marker data generated by lane marker detector 320. Digital map data 310 can comprise geometrical information describing the geometry of roads (e.g., road 200) comprising a road network. Such geometrical information can include longitude coordinates, latitude coordinates, and/or other geometrical information describing the geometry of roads. In an embodiment, digital map data 310 can be obtained from an Electronic Horizon (EH) system. As shown by FIG. 4, the geometrical information of digital map data 310 can form a representation of a road network that can describe a topography of the road network using a number of links. A link in digital map data 310 can be a segment of a road that connects a pair of intersections. The shape of a link in digital map data 310 can be defined by a plurality of shape points comprising the link. A shape point of digital map data 310 can store geometrical information associated with a particular location in the road. A pair of shape points comprising a link in digital map data 310 can be connected with a shape line.

By way of example, in FIG. 4, digital map data 310 includes link 400 that connects an intersection corresponding to shape point 410 with an intersection corresponding to shape point 440. The shape of link 400 is defined in FIG. 4 by four shape points (e.g., shape points 410, 420, 430, and/or 440). Those four shape points can each store geometrical information associated with a particular location of a road represented by digital map data 310. In FIG. 4, shape line 450 connects shape point 410 with shape point 420, shape line 460 connects shape point 420 with shape point 430, and shape line 470 connects shape point 430 with shape point 440.

In addition to geometrical information that can describe a topography of a road network, digital map data 310 can further comprise attribute information describing attributes defined for roads comprising a road network. Such attribute information can include road signs, number of lanes, speed limits, curvature data (or road radius data), and/or other attribute information describing defined attributes of roads. By way of example and with reference to FIG. 5, a road segment 500 can curve 510 and curve 520. As shown by FIG. 5, curve 510 can comprise a radius of curvature $r_1$ and curve 520 can comprise a radius of curvature $r_2$. FIG. 6 illustrates that such curvature data for road segment 500 can be stored as attribute information in shape points of digital map data 310 that correspond with curve 510 and curve 520. For example, the radius of curvature $r_1$ of curve 510 and the radius of curvature $r_2$ of curve 520 can be stored as attribute information in shape points 610 and 620, respectively, of digital map data 310.

A comparison between FIGS. 5 and 6 illustrates that a resolution of curvature data associated with a representation of a road segment formed by digital map data 310 can be insufficient for determining a safety operational profile for traversing a curve of a road preceding vehicle 210. In some instances (e.g., smaller roads with excessive curvature and/or positions proximate to intersections in a road network), curvature data of digital map data 310 can substantially deviate (e.g., by +/- 10 %) from measured curvature values. As such, curvature component 140 of framework 300 can augment such curvature data with lane marker data generated by lane marker detector 320 to generate composite curvature data R. The composite curvature data R generated by curvature component 140 can thereby provide safety component 160 of framework 300 with higher resolution curvature data. Such higher resolution curvature data can facilitate increasing an accuracy of a safe operational profile that safety component 160 determines for traversing a curve.

As shown by FIG. 3, lane marker detector 320 can generate lane marker data using optical data received from one or more optical sensors 330 of vehicle 210. In an embodiment, the one or more optical sensors 330 can comprise a photodetector associated with a light detection and ranging (LiDAR) scanner. In an embodiment, the one or more optical sensors 330 can comprise an image sensor (e.g., a complimentary metal-oxide-semiconductor (CMOS) image sensor and/or a charge-coupled device (CCD) image sensor). In an embodiment, the one or more optical sensors 330 can comprise an image sensor that can generate image data that corresponds to, at least, a portion of a road preceding vehicle 210. By way of example, the one or more optical sensors 330 can comprise an image sensor that can generate image data 700 of FIG. 7.

In an embodiment, lane marker detector 320 can comprise a machine learning model that can generate lane marker data at an output responsive to optical data received from the one or more optical sensors 330 of vehicle 210. In an embodiment, the machine learning model can comprise a neural network. In an embodiment, the neural network can be a deep neural network. Continuing with the example above discussed with respect to FIG. 7, the lane marker detector 320 can generate lane marker data 710 and/or 720 at an output responsive to receiving image data 700 at an input. As shown by FIG. 7, lane marker data 710 and/or 720 can approximate positions of lane markers within the portion of the road preceding vehicle 210. If image data 700 depicts a portion of road 200 that precedes vehicle 210 in FIG. 2, lane marker data 710 and 720 can approximate positions of lane markers 203 and 201, respectively, within that portion of road 200.

As discussed above with reference to FIG. 3, curvature component 140 of framework 300 can augment curvature data of digital map data 310 with lane marker data generated by lane marker detector 320 to generate composite curvature data R. To that end, curvature component 140 can obtain curvature data from lane marker data generated by lane marker detector 320. In an embodiment, curvature component 140 can obtain curvature data from lane marker data by applying an edge detection algorithm to the lane marker data. In an embodiment, applying the edge detection algorithm can comprise applying a Sobel operator to the lane marker data to obtain curvature data from the lane marker data. In generating composite curvature data R, curvature component 140 can compare curvature data of digital map data 310 with curvature data obtained from the lane marker data to identify a gradient. Curvature component 140 can reduce the identified gradient to generate composite curvature data R comprising higher resolution curvature data than can be obtained directly from digital map data 310.

In framework 300, road condition component 150 can provide another input modality that safety component 160 can leverage to determine a safety operational profile for traversing a curve of a road preceding vehicle 210. In particular, road condition component 150 can generate friction data for a surface of a road using sensor data obtained from one or more on-board sensors 340 of vehicle 210. With reference to FIG. 8, such friction data generated by road condition component 150 can include detected friction data $\mu_d$ 810 and predicted friction data $\mu_p$ 820. Detected friction data $\mu_d$ 810 can be indicative of friction between vehicle 210 and a surface of the road measured by the one or more on-board sensors 340. In an embodiment, the one or more on-board sensors 340 can include a sensor that measures tire-road friction and/or a sensor that measures tire pressure.

Predicted friction data $\mu_p$ 820 can be indicative of estimated friction associated with a surface of a road that precedes vehicle 210. In an embodiment, road condition component 150 can comprise a machine learning model trained to generate predicted friction data $\mu_p$ 820 at an output responsive to receiving optical data corresponding to the surface of the road that precedes vehicle 210 at an input. In an embodiment, the one or more on-board sensors 340 can include an optical sensor that generates the optical data received as input at the input of the machine learning model of road condition component 150. In an embodiment, the optical sensor can include a photodetector associated with a LiDAR scanner, an image sensor (e.g., a CMOS image sensor and/or a CCD image sensor), and/or other optical sensors that can generate optical data corresponding to a surface of a road that precedes vehicle 210.

In framework 300, driver style detector 170 can provide another input modality that safety component 160 can leverage to determine a safety operational profile for traversing a curve of a road preceding vehicle 210. In particular, driver style detector 170 can generate a driving style parameter $d_p$ for a driver of vehicle 210 using a machine learning model. Different drivers can operate vehicle 210 at different speeds while traversing the same curve under the same road conditions due to different driving styles. For example, a driver with an aggressive driving style can generally tolerate higher lateral acceleration than a driver with a cautious driving style. As such, the driver with the aggressive driving style can be more likely to operate vehicle 210 at a higher speed while traversing the same curve under the same road conditions than the driver with the cautious driving style. Safety component 160 can modify a safe operational profile based on a driving style parameter $d_p$ to account for such differences.

With reference to FIG. 9, driver style detector 170 can comprise a machine learning model that can generate a driving style parameter $d_p$ 920 at an output responsive to vehicle operation data 910 received at an input. In an embodiment, the machine learning model can comprise a Long Short Term Memory with Fully Convolutional Network (LSTM-FCN). As shown by FIG. 9, vehicle operation data 910 can include vehicle acceleration data, vehicle speed data, vehicle inertial data, road geometry data, in-lane orientation data, in-lane position data, following distance data, lead time data, road type data, and/or other vehicle operation data indicative of driving style. Vehicle operation data 910 can be obtained using sensor data received from the one or more on-board sensors 340 of vehicle 210.

Vehicle acceleration data can include sensor data indicative of lateral acceleration, longitudinal acceleration, and/or vertical acceleration. Vehicle speed data can include sensor data indicative of transmission output, transaxle output, and/or wheel speed. Vehicle inertial data can include sensor data indicative of roll motion, pitch motion, and/or yaw motion. Road geometry data can include curvature data (e.g., curvature data obtained from digital map data 310, curvature data obtained using lane marker data, and/or composite curvature data R), lane width data, road inclination or elevation gradient data, and/or other data indicative of road geometry. In-lane orientation data and in-lane position data can correspond to an angle of vehicle 210 and a position of vehicle 210 relative to a lane center, respectively. In an embodiment, in-lane orientation data and/or in-lane position data can be generated using lane marker data generated by lane marker detector 320.

Following distance data can correspond to a distance (e.g., distance D 840 of FIG. 8) detected between vehicle 210 and a vehicle (e.g., vehicle 830) that precedes vehicle 210. Lead time data can correspond to a time in which vehicle 210 can traverse a distance detected between vehicle 210 and a vehicle that precedes vehicle 210. In an embodiment, lead time data can be generated using following distance data and vehicle speed data. Road type data can correspond to one or more attributes of a road being traversed by vehicle 210. Example attributes can include, but not be limited to, a paved state (e.g., paved or unpaved) of the road, road functional classification (e.g., interstate, freeway, principal arterials, minor arterials, and/or other road functional classifications), and/or other attributes of a road. In an embodiment, road type data can be obtained using attribute information of digital map data 310.

With reference to FIG. 3, safety component 160 can leverage various input modalities to determine a safe operational profile for traversing a curve (e.g., curved segment 207 of FIG. 2) preceding vehicle 210, as discussed above. The safe operation profile generally corresponds to one or more vehicle operation parameters (e.g., vehicle speed, steering angle, and/or other parameters that can impact movement of vehicle 210 while traversing a curve) that can facilitate minimizing a likelihood that vehicle 210 rolls over and/or sideslips while traversing the curve. In an embodiment, the safe operational profile can facilitate maintaining lateral and/or longitudinal acceleration values for vehicle 210 below defined threshold values while traversing the curve thereby enhancing occupant safety and/or comfort. In an embodiment, the safety operational profile can include a safety speed, a safety steering angle, or a combination thereof. In an embodiment, safety component 160 can determine a safety speed for a safe operational profile using the relationship defined by Equation 1:

$$V_{safe} \leq k_{dp} \times \min(V_s, V_r)$$

Equation 1.

In accordance with Equation 1 above, $V_{safe}$ can denote a safety speed, $k_{dp}$ can denote a driver profile coefficient, $V_s$ can denote a critical sideslip speed, and $V_r$ can denote a critical rollover speed. In an embodiment, safety component 160 can determine a critical sideslip speed $V_s$ and a critical rollover speed $V_r$ using the functions defined by Equations 2 and 3, respectively:

$$V_s = \sqrt{\mu_p g R}$$

Equation 2.

$$V_r = \sqrt{\frac{BgR}{2h}}$$

Equation 3.

In accordance with Equation 2 above, $\mu_p$ can denote a predicted friction data coefficient, g can denote gravity, and R can denote composite curvature data generated by curvature component 140 for the curve. In accordance with Equation 3 above, B can denote a vehicle track width and h can denote a center of gravity height of vehicle 210, respectively.

In an embodiment, safety component 160 can determine a safe operational profile for traversing a curve that can vary at different points within the curve. By way of example and with reference to FIG. 2, the safe operational profile can comprise a first safety speed associated with position 253 of curved segment 207 that can be higher than a second safety speed associated with position 254. In this example, the safe operational profile can further comprise a third safety speed associated with position 255 of curved segment 207 that is lower than the first and second safety speeds. In an embodiment, the safe operational profile can vary at different points within the curve based on changes in road surface conditions and/or road attributes that safety component 160 detects at the different points.

In an embodiment, safety component 160 can compute a trigger distance for a safe operational profile using composite curvature data R generated by curvature component 140 and/or friction data generated by road condition component 150. A trigger distance can generally correspond to a distance preceding a curve at which vehicle 210 can initiate operating in accordance with a safe operational profile. By way of example and with reference to FIG. 2, a transition between non-curved segment 206 and curved segment 207 occurs proximate to position 252 of road 200. In this example, safety component 160 can compute a trigger distance defined by positions 251 and 252 of road 200 using composite curvature data R generated by curvature component 140 and/or friction data generated by road condition component 150. If the composite curvature data R indicates that curved segment 207 comprises greater curvature than depicted in FIG. 2 and/or the friction data indicates that lower friction exists within curved segment 207, safety component 160 can compute a longer trigger distance. If the composite curvature data R indicates that curved segment 207 comprises lower curvature than depicted in FIG. 2 and/or the friction data indicates that higher friction exists within curved segment 207, safety component 160 can compute a shorter trigger distance.

With reference to FIG. 3, Vehicle controller 180 can facilitate dynamically altering operation of vehicle 210 based on a safe operational profile determined by safety component 160. To that end, vehicle controller 180 can interface with an embedded application of a vehicle functional unit (e.g., electronic control units and/or electronic control modules) of vehicle 210 that can control one or more operational systems (or subsystems) within vehicle 210. Examples of such operational systems (or subsystems) within vehicle 210 can include, but not be limited to, electrical systems, electronic systems, electromechanical systems, mechanical systems, mechatronics systems, or other operational systems related to operation of vehicle 210. By way of example, vehicle controller 180 can interface with an embedded application of a vehicle functional unit of vehicle 210 to dynamically alter a steering angle and/or a vehicle speed of vehicle 210 in accordance with the safe operational profile determined by safety component 160.

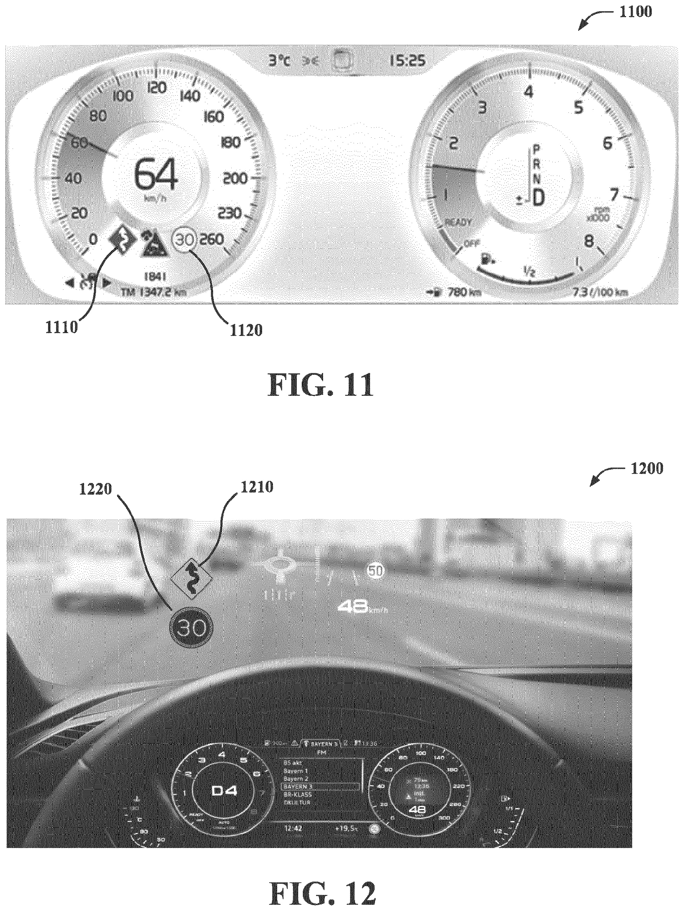

Driver alert component 190 can present one or more graphical elements regarding a curve preceding vehicle 210 to a driver of vehicle 210 via an on-board display. By way of example, driver alert component 190 present such graphical elements to the driver via a dashboard display (e.g., dashboard display 1100 of FIG. 11), a heads-up display (e.g., heads-up display 1200 of FIG. 12), and/or other on-board displays. As best seen in FIGS. 11-12, the one or more graphical elements can include a curve element 1110 and/or a recommendation element 1120. The curve element 1110 can alert the driver as to the presence of the upcoming curve. The recommendation element 1120 can present the driver with an element (e.g., a safety speed) of the safe operation profile determined by safety component 160. In an embodiment, driver alert component 190 can also issue an audible alert and/or haptic alert regarding the curve to the driver.

Collaboration interface 350 can facilitate interactions between an external computing device and one or more components of framework 300. By way of example and with reference to FIG. 10, collaboration interface 350 can establish one or more communication links in network environment 1000. As shown by FIG. 10, network environment 1000 can comprise a Vehicle-to-Vehicle (V2V) communication link 1010, a Vehicle-to-Infrastructure (V2I) communication link 1020, and/or a Vehicle-to-Cloud (V2C) communication link 1030. In network environment 1000, collaboration interface 350 can facilitate interactions between an external computing device of vehicle 1040 and one or more components of framework 300 via V2V communication link 1010. For example, road condition component 150 can wirelessly transmit friction data for a road surface to the external computing device of vehicle 1040 via V2V communication link 1010 established by collaboration interface 350. As another example, safety component 160 can wirelessly transmit one or more elements of a safe operational profile determined for traversing a curve to the external computing device of vehicle 1040.

In network environment 1000, collaboration interface 350 can further facilitate interactions between an external computing device of infrastructure 240 and one or more components of framework 300 via V2I communication link 1020. For example, safety component 160 can wirelessly transmit a safety speed of a safe operational profile determined for traversing a curve to the external computing device of infrastructure 240 via the V2I communication link 1020 established by collaboration interface 350.

In network environment 1000, collaboration interface 350 can further facilitate interactions between an external computing device of cloud environment 1050 and one or more components of framework 300 via V2C communication link 1030. For example, safety component 160 can wirelessly transmit a safety speed of a safe operational profile determined for traversing a curve to the external computing device of cloud environment 1050 via the V2C communication link 1030 established by collaboration interface 350. In this example, the external computing device of cloud environment 1050 can push a safety speed received from one or more vehicles (e.g., vehicle 210) to the external computing device of infrastructure 240 via communication link 1060. The external computing device of infrastructure 240 can modify a recommended speed for the curve based on the safety speed to account for current road conditions.

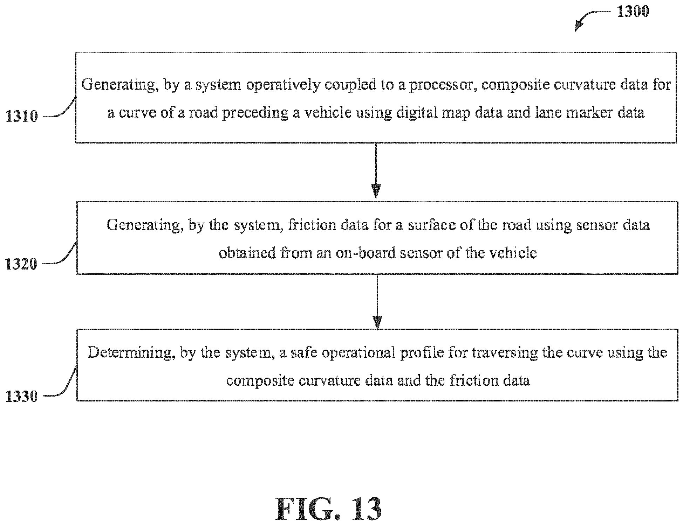

FIG. 13 illustrates a flow diagram of an example, non-limiting computer-implemented method 1300 that can facilitate dynamic curve speed control adaptive to road conditions, in accordance with one or more embodiments described herein. Repetitive description of like elements employed in other embodiments described herein is omitted for sake of brevity. At 1310, the computer-implemented method 1300 can comprise generating, by a system operatively coupled to a processor (e.g., using curvature component 140), composite curvature data for a curve of a road preceding a vehicle using digital map data and lane marker data. In an embodiment, the system can obtain the lane marker data from a neural network that receives optical data from an optical sensor of the vehicle.

At 1320, the computer-implemented method 1300 can comprise generating, by the system (e.g., using road condition component 150), friction data for a surface of the road using sensor data obtained from an on-board sensor of the vehicle. In an embodiment, the friction data can include detected friction data indicative of friction between the vehicle and the surface measured by the on-board sensor. In an embodiment, the on-board sensor can comprise an optical sensor. In an embodiment, the friction data can include predicted friction data that is estimated for a portion of the surface that precedes the vehicle using optical data received from the optical sensor. At 1330, the computer-implemented method 1000 can comprise determining, by the system (e.g., using safety component 160), a safe operational profile for traversing the curve using the composite curvature data and the friction data.

In an embodiment, the computer-implemented method 1300 can further comprise generating, by the system (e.g., using driver style component 170), a driving style parameter for a driver of the vehicle using a machine learning model. In an embodiment, the computer-implemented method 1300 can further comprise modifying, by the system (e.g., using safety component 160), the safe operational profile based on the driving style parameter. In an embodiment, the computer-implemented method 1300 can further comprise dynamically altering, by the system (e.g., using vehicle controller 180), automated operation of the vehicle based on the safe operational profile.

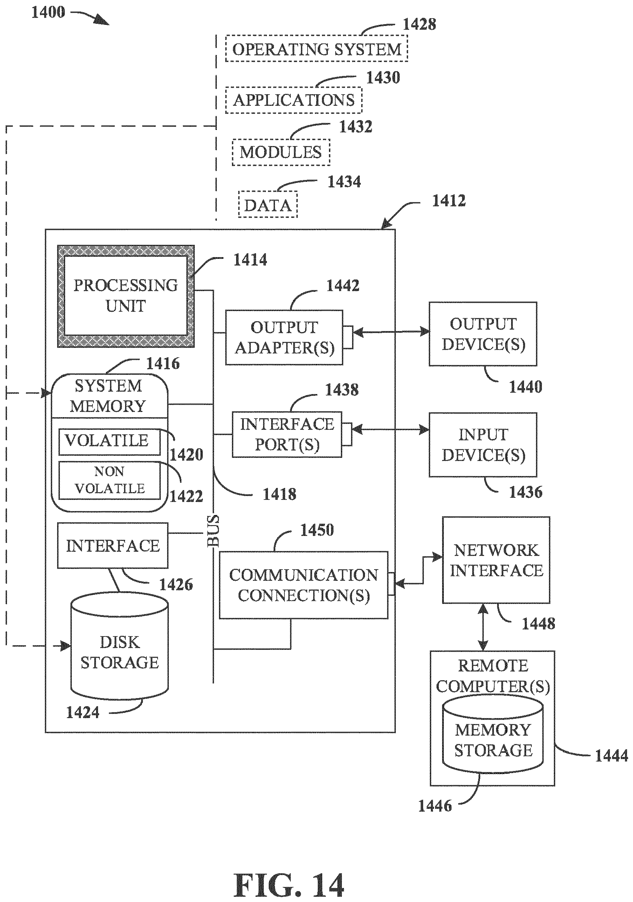

In order to provide a context for the various aspects of the disclosed subject matter, FIG. 14 as well as the following discussion are intended to provide a general description of a suitable environment in which the various aspects of the disclosed subject matter can be implemented. FIG. 14 illustrates a suitable operating environment 1400 for implementing various aspects of this disclosure can also include a computer 1412. The computer 1412 can also include a processing unit 1414, a system memory 1416, and a system bus 1418. The system bus 1418 couples system components including, but not limited to, the system memory 1416 to the processing unit 1414. The processing unit 1414 can be any of various available processors. Dual microprocessors and other multiprocessor architectures also can be employed as the processing unit 1414. The system bus 1418 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Firewire (IEEE 1094), and Small Computer Systems Interface (SCSI). The system memory 1416 can also include volatile memory 1420 and nonvolatile memory 1422. The basic input/output system (BIOS), containing the basic routines to transfer information between elements within the computer 1412, such as during start-up, is stored in nonvolatile memory 1422. By way of illustration, and not limitation, nonvolatile memory 1422 can include read only memory (ROM), programmable ROM (PROM), electrically programmable ROM (EPROM), electrically erasable programmable ROM (EEPROM), flash memory, or nonvolatile random-access memory (RAM) (e.g., ferroelectric RAM (FeRAM). Volatile memory 1420 can also include random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM.

Computer 1412 can also include removable/non-removable, volatile/non-volatile computer storage media. FIG. 14 illustrates, for example, a disk storage 1424. Disk storage 1424 can also include, but is not limited to, devices like a magnetic disk drive, floppy disk drive, tape drive, Jaz drive, Zip drive, LS-100 drive, flash memory card, or memory stick. The disk storage 1424 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1424 to the system bus 1418, a removable or non-removable interface is typically used, such as interface 1426. FIG. 14 also depicts software that acts as an intermediary between users and the basic computer resources described in the suitable operating environment 1400. Such software can also include, for example, an operating system 1428. Operating system 1428, which can be stored on disk storage 1424, acts to control and allocate resources of the computer 1412. System applications 1430 take advantage of the management of resources by operating system 1428 through program modules 1432 and program data 1434, e.g., stored either in system memory 1416 or on disk storage 1424. It is to be appreciated that this disclosure can be implemented with various operating systems or combinations of operating systems. A user enters commands or information into the computer 1412 through input device(s) 1436. Input devices 1436 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1414 through the system bus 1418 via interface port(s) 1438. Interface port(s) 1438 include, for example, a serial port, a parallel port, a game port, and a universal serial bus (USB). Output device(s) 1440 use some of the same type of ports as input device(s) 1436. Thus, for example, a USB port can be used to provide input to computer 1412, and to output information from computer 1412 to an output device 1440. Output adapter 1442 is provided to illustrate that there are some output devices 1440 like monitors, speakers, and printers, among other output devices 1440, which require special adapters. The output adapters 1442 include, by way of illustration and not limitation, video and sound cards that provide a means of connection between the output device 1440 and the system bus 1418. It can be noted that other devices and/or systems of devices provide both input and output capabilities such as remote computer(s) 1444.

Computer 1412 can operate in a networked environment using logical connections to one or more remote computers, such as remote computer(s) 1444. The remote computer(s) 1444 can be a computer, a server, a router, a network PC, a workstation, a microprocessor-based appliance, a peer device or other common network node and the like, and typically can also include many or the elements described relative to computer 1412. For purposes of brevity, only a memory storage device 1446 is illustrated with remote computer(s) 1444. Remote computer(s) 1444 is logically connected to computer 1412 through a network interface 1448 and then physically connected via communication connection 1450. Network interface 1448 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 1450 refers to the hardware/software employed to connect the network interface 1448 to the system bus 1418. While communication connection 1450 is shown for illustrative clarity inside computer 1412, it can also be external to computer 1412. The hardware/software for connection to the network interface 1448 can also include, for exemplary purposes only, internal and external technologies such as, modems including regular telephone grade modems, cable modems and DSL modems, ISDN adapters, and Ethernet cards.

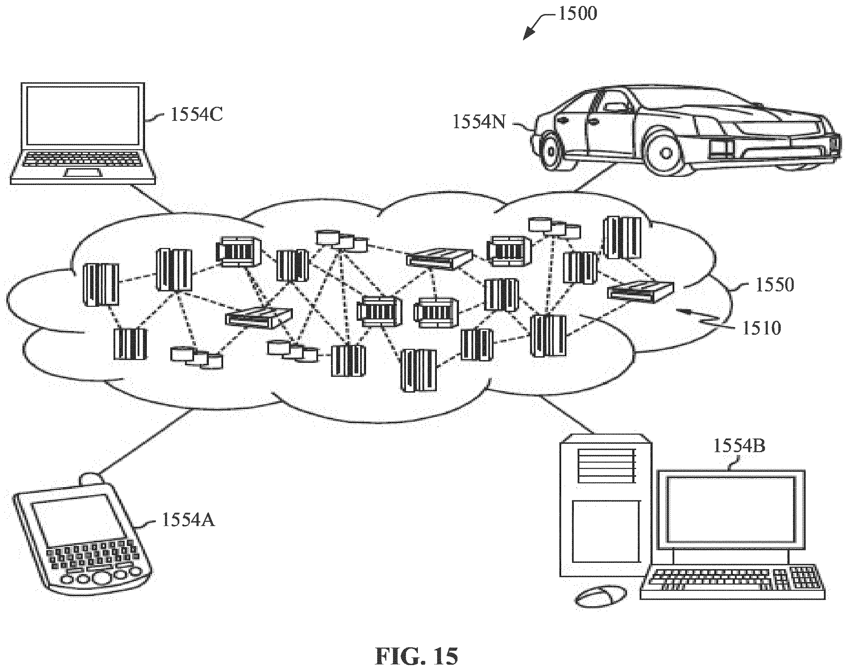

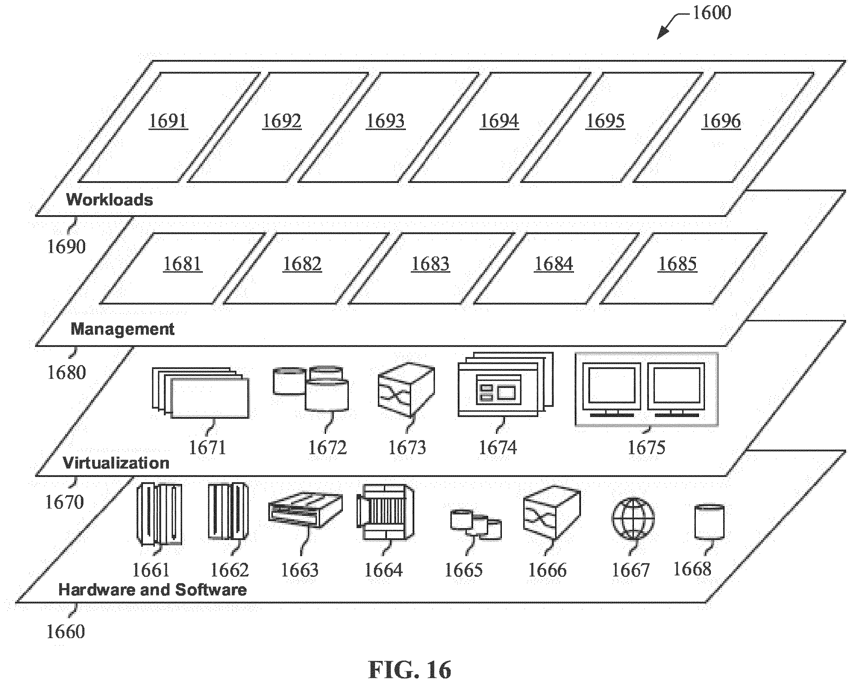

In some cases, the various embodiments of system 100 described herein can be associated with a cloud computing environment. For example, the system 100 can be associated with cloud computing environment 1550 as is illustrated in FIG. 15 and/or one or more functional abstraction layers described herein with reference to FIG. 16 (e.g., hardware and software layer 1060, virtualization layer 1670, management layer 1680, and/or workloads layer 1690).

It is to be understood that although this disclosure includes a detailed description on cloud computing, implementation of the teachings recited herein are not limited to a cloud computing environment. Rather, embodiments of the present invention are capable of being implemented in conjunction with any other type of computing environment now known or later developed.

Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

Characteristics are as follows:

On-demand self-service: a cloud consumer can unilaterally provision computing capabilities, such as server time and network storage, as needed automatically without requiring human interaction with the service's provider.

Broad network access: capabilities are available over a network and accessed through standard mechanisms that promote use by heterogeneous thin or thick client platforms (e.g., mobile phones, laptops, and PDAs).

Resource pooling: the provider's computing resources are pooled to serve multiple consumers using a multi-tenant model, with different physical and virtual resources dynamically assigned and reassigned according to demand. There is a sense of location independence in that the consumer generally has no control or knowledge over the exact location of the provided resources but may be able to specify location at a higher level of abstraction (e.g., country, state, or datacenter).

Rapid elasticity: capabilities can be rapidly and elastically provisioned, in some cases automatically, to quickly scale out and rapidly released to quickly scale in. To the consumer, the capabilities available for provisioning often appear to be unlimited and can be purchased in any quantity at any time.

Measured service: cloud systems automatically control and optimize resource use by leveraging a metering capability at some level of abstraction appropriate to the type of service (e.g., storage, processing, bandwidth, and active user accounts). Resource usage can be monitored, controlled, and reported, providing transparency for both the provider and consumer of the utilized service.

Service Models are as follows:

Software as a Service (SaaS): the capability provided to the consumer is to use the provider's applications running on a cloud infrastructure. The applications are accessible from various client devices through a thin client interface such as a web browser (e.g., web-based e-mail). The consumer does not manage or control the underlying cloud infrastructure including network, servers, operating systems, storage, or even individual application capabilities, with the possible exception of limited user-specific application configuration settings.

Platform as a Service (PaaS): the capability provided to the consumer is to deploy onto the cloud infrastructure consumer-created or acquired applications created using programming languages and tools supported by the provider. The consumer does not manage or control the underlying cloud infrastructure including networks, servers, operating systems, or storage, but has control over the deployed applications and possibly application hosting environment configurations.

Infrastructure as a Service (IaaS): the capability provided to the consumer is to provision processing, storage, networks, and other fundamental computing resources where the consumer is able to deploy and run arbitrary software, which can include operating systems and applications. The consumer does not manage or control the underlying cloud infrastructure but has control over operating systems, storage, deployed applications, and possibly limited control of select networking components (e.g., host firewalls).

Deployment Models are as follows:

Private cloud: the cloud infrastructure is operated solely for an organization. It may be managed by the organization or a third party and may exist on-premises or off-premises.

Community cloud: the cloud infrastructure is shared by several organizations and supports a specific community that has shared concerns (e.g., mission, security requirements, policy, and compliance considerations). It may be managed by the organizations or a third party and may exist on-premises or off-premises.

Public cloud: the cloud infrastructure is made available to the general public or a large industry group and is owned by an organization selling cloud services.

Hybrid cloud: the cloud infrastructure is a composition of two or more clouds (private, community, or public) that remain unique entities but are bound together by standardized or proprietary technology that enables data and application portability (e.g., cloud bursting for load-balancing between clouds).

A cloud computing environment is service oriented with a focus on statelessness, low coupling, modularity, and semantic interoperability. At the heart of cloud computing is an infrastructure that includes a network of interconnected nodes.

Referring now to FIG. 15 an illustrative cloud computing environment 1550 is depicted. As shown, cloud computing environment 1550 includes one or more cloud computing nodes 1510 with which local computing devices used by cloud consumers, such as, for example, personal digital assistant (PDA) or cellular telephone 1554A, desktop computer 1554B, laptop computer 1554C, and/or automobile computer system 1554N may communicate. Although not illustrated in FIG. 15, cloud computing nodes 1510 can further comprise a quantum platform (e.g., quantum computer, quantum hardware, quantum software, and/or another quantum platform) with which local computing devices used by cloud consumers can communicate. Nodes 1510 may communicate with one another. They may be grouped (not shown) physically or virtually, in one or more networks, such as Private, Community, Public, or Hybrid clouds as described hereinabove, or a combination thereof. This allows cloud computing environment 1550 to offer infrastructure, platforms and/or software as services for which a cloud consumer does not need to maintain resources on a local computing device. It is understood that the types of computing devices 1554A-N shown in FIG. 15 are intended to be illustrative only and that computing nodes 1510 and cloud computing environment 1550 can communicate with any type of computerized device over any type of network and/or network addressable connection (e.g., using a web browser).

Referring now to FIG. 16, a set of functional abstraction layers provided by cloud computing environment 1550 (FIG. 15) is shown. It should be understood in advance that the components, layers, and functions shown in FIG. 16 are intended to be illustrative only and embodiments of the invention are not limited thereto. As depicted, the following layers and corresponding functions are provided:

Hardware and software layer 1660 include hardware and software components. Examples of hardware components include: mainframes 1661; RISC (Reduced Instruction Set Computer) architecture based servers 1662; servers 1663; blade servers 1664; storage devices 1665; and networks and networking components 1666. In some embodiments, software components include network application server software 1667, database software 1668, quantum platform routing software (not illustrated in FIG. 16), and/or quantum software (not illustrated in FIG. 16).

Virtualization layer 1670 provides an abstraction layer from which the following examples of virtual entities may be provided: virtual servers 1671; virtual storage 1672; virtual networks 1673, including virtual private networks; virtual applications and operating systems 1674; and virtual clients 1675.

In one example, management layer 1680 may provide the functions described below. Resource provisioning 1681 provides dynamic procurement of computing resources and other resources that are utilized to perform tasks within the cloud computing environment. Metering and pricing 1682 provide cost tracking as resources are utilized within the cloud computing environment, and billing or invoicing for consumption of these resources. In one example, these resources may include application software licenses. Security provides identity verification for cloud consumers and tasks, as well as protection for data and other resources. User portal 1683 provides access to the cloud computing environment for consumers and system administrators. Service level management 1684 provides cloud computing resource allocation and management such that required service levels are met. Service Level Agreement (SLA) planning and fulfillment 1685 provide pre-arrangement for, and procurement of, cloud computing resources for which a future requirement is anticipated in accordance with an SLA.

Workloads layer 1690 provides examples of functionality for which the cloud computing environment may be utilized. Non-limiting examples of workloads and functions which may be provided from this layer include: mapping and navigation 1691; software development and lifecycle management 1692; virtual classroom education delivery 1693; data analytics processing 1694; transaction processing 1695; and vulnerability risk assessment software 1696.

The present invention may be a system, a method, an apparatus and/or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art will recognize that this disclosure also can or can be implemented in combination with other program modules. Generally, program modules include routines, programs, components, data structures, etc. that perform particular tasks and/or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices. For example, in one or more embodiments, computer executable components can be executed from memory that can include or be comprised of one or more distributed memory units. As used herein, the term "memory" and "memory unit" are interchangeable. Further, one or more embodiments described herein can execute code of the computer executable components in a distributed manner, e.g., multiple processors combining or working cooperatively to execute code from one or more distributed memory units. As used herein, the term "memory" can encompass a single memory or memory unit at one location or multiple memories or memory units at one or more locations.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a graphics processing unit (GPU), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Further aspects of the invention relate to:

1. A system, comprising:
a processor that executes the following computer-executable components stored in memory:

a curvature component that generates composite curvature data for a curve of a road preceding a vehicle using digital map data and lane marker data;
a road condition component that generates friction data for a surface of the road using sensor data obtained from an on-board sensor of the vehicle; and
a safety component that determines a safe operational profile for traversing the curve using the composite curvature data and the friction data.

2. The system of aspect 1, wherein the safe operational profile includes a safety speed, a safety steering angle, or a combination thereof.

3. The system of aspect 1, wherein the safe operational profile varies at different points within the curve.

4. The system of aspect 1, wherein the curvature component obtains the lane marker data from a machine learning model that receives optical data from an optical sensor of the vehicle.

5. The system of aspect 1, wherein the friction data includes detected friction data indicative of friction between the vehicle and the surface measured by the on-board sensor.

6. The system of aspect 1, wherein the on-board sensor comprises an optical sensor, and wherein the friction data includes predicted friction data that is estimated for a portion of the surface that precedes the vehicle using optical data received from the optical sensor.

7. The system of aspect 1, further comprising:
a driver style detector that generates a driving style parameter for a driver of the vehicle using a machine learning model.

8. The system of aspect 7, wherein the safety component modifies the safe operational profile based on the driving style parameter.

9. The system of aspect 1, further comprising:
a vehicle controller that dynamically alters automated operation of the vehicle based on the safe operational profile.

10. The system of aspect 1, further comprising:
a driver alert component that presents an indication of the curve and an element of the safe operational profile to a driver of the vehicle.

11. The system of aspect 1, wherein the road condition component further wirelessly transmits the friction data to an external computing device.

12. A computer-implemented method, comprising:

generating, by a system operatively coupled to a processor, composite curvature data for a curve of a road preceding a vehicle using digital map data and lane marker data;
generating, by the system, friction data for a surface of the road using sensor data obtained from an on-board sensor of the vehicle; and
determining, by the system, a safe operational profile for traversing the curve using the composite curvature data and the friction data.

13. The computer-implemented method of aspect 12, wherein the system obtains the lane marker data from a neural network that receives optical data from an optical sensor of the vehicle.

14. The computer-implemented method of aspect 12, wherein the friction data includes detected friction data indicative of friction between the vehicle and the surface measured by the on-board sensor.

15. The computer-implemented method of aspect 12, wherein the on-board sensor comprises an optical sensor, and wherein the friction data includes predicted friction data that is estimated for a portion of the surface that precedes the vehicle using optical data received from the optical sensor.

16. The computer-implemented method of aspect 12, further comprising:

generating, by the system, a driving style parameter for a driver of the vehicle using a machine learning model; and
modifying, by the system, the safe operational profile based on the driving style parameter.

17. The computer-implemented method of aspect 12, further comprising:
dynamically altering, by the system, automated operation of the vehicle based on the safe operational profile.

18. A computer program product comprising a computer readable storage medium having program instructions embodied therewith, the program instructions executable by a processor to cause the processor to:

generate, by the processor, composite curvature data for a curve of a road preceding a vehicle using digital map data and lane marker data;
generate, by the processor, friction data for a surface of the road using sensor data obtained from an on-board sensor of the vehicle; and
determine, by the processor, a safe operational profile for traversing the curve using the composite curvature data and the friction data.

19. The computer program product of aspect 18, wherein the program instructions are executable by the processor to further cause the processor to:
dynamically alter, by the processor, automated operation of the vehicle based on the safe operational profile.

20. The computer program product of aspect 18, wherein the program instructions are executable by the processor to further cause the processor to:
generate, by the processor, a driving style parameter for a driver of the vehicle using a machine learning model; and modify, by the processor, the safe operational profile based on the driving style parameter.

**Claims**

1. A system, comprising:
a processor that executes the following computer-executable components stored in memory:

a curvature component that generates composite curvature data for a curve of a road preceding a vehicle using digital map data and lane marker data;
a road condition component that generates friction data for a surface of the road using sensor data obtained from an on-board sensor of the vehicle; and
a safety component that determines a safe operational profile for traversing the curve using the composite curvature data and the friction data.

2. The system according to claim 1, wherein the safe operational profile includes a safety speed, a safety steering angle, or a combination thereof.

3. The system according to claim 1, wherein the safe operational profile varies at different points within the curve.

4. The system according to claim 1, wherein the curvature component obtains the lane marker data from a machine learning model that receives optical data from an optical sensor of the vehicle.

5. The system according to claim 1, wherein the friction data includes detected friction data indicative of friction between the vehicle and the surface measured by the on-board sensor.

6. The system according to claim 1, wherein the on-board sensor comprises an optical sensor, and wherein the friction data includes predicted friction data that is estimated for a portion of the surface that precedes the vehicle using optical data received from the optical sensor.

7. The system according to claim 1, further comprising:
a driver style detector that generates a driving style parameter for a driver of the vehicle using a machine learning model.

8. The system according to claim 7, wherein the safety component modifies the safe operational profile based on the driving style parameter.

9. The system according to claim 1, further comprising:
a vehicle controller that dynamically alters automated operation of the vehicle based on the safe operational profile.

10. The system according to claim 1, further comprising:
a driver alert component that presents an indication of the curve and an element of the safe operational profile to a driver of the vehicle.

11. The system according to claim 1, wherein the road condition component further wirelessly transmits the friction data to an external computing device.

12. A computer-implemented method, comprising:

   generating, by a system operatively coupled to a processor, composite curvature data for a curve of a road preceding a vehicle using digital map data and lane marker data;
   generating, by the system, friction data for a surface of the road using sensor data obtained from an on-board sensor of the vehicle; and
   determining, by the system, a safe operational profile for traversing the curve using the composite curvature data and the friction data.

13. The computer-implemented method according to claim 12, wherein the system obtains the lane marker data from a neural network that receives optical data from an optical sensor of the vehicle.

14. The computer-implemented method according to claim 12, wherein the friction data includes detected friction data indicative of friction between the vehicle and the surface measured by the on-board sensor.

15. The computer-implemented method according to claim 12, further comprising:
   generating, by the system, a driving style parameter for a driver of the vehicle using a machine learning model; and modifying, by the system, the safe operational profile based on the driving style parameter, wherein the on-board sensor comprises an optical sensor, and wherein the friction data includes predicted friction data that is estimated for a portion of the surface that precedes the vehicle using optical data received from the optical sensor.

FIG. 1

FIG. 2

EP 4 112 407 A1

**FIG. 3**

EP 4 112 407 A1

FIG. 4

FIG. 5

FIG. 6

700

710    720

**FIG. 7**

210    840    830

$\mu_d$    $\mu_p$

810    820

**FIG. 8**

910

Vehicle Acceleration Data

Vehicle Speed Data

Vehicle Inertial Data

Road Geometry Data

In-Lane Orientation Data

In-Lane Position Data

Following Distance Data

Lead Time Data

Road Type Data

DRIVER STYLE
DETECTOR 170

920

Driving Parameter

Aggressive driving

Moderate driving

Cautious driving

**FIG. 9**

1050

1060

240

1030

1020

1040

1010

210

**FIG. 10**

1100

1110  1120

**FIG. 11**

1200

1220  1210

**FIG. 12**

1300

1310 — Generating, by a system operatively coupled to a processor, composite curvature data for a curve of a road preceding a vehicle using digital map data and lane marker data

1320 — Generating, by the system, friction data for a surface of the road using sensor data obtained from an on-board sensor of the vehicle

1330 — Determining, by the system, a safe operational profile for traversing the curve using the composite curvature data and the friction data

# FIG. 13

1400

1428
OPERATING SYSTEM

1430
APPLICATIONS

1432
MODULES

1434
DATA

1412

1414
PROCESSING UNIT

1416
SYSTEM MEMORY

VOLATILE

1420

NON VOLATILE

1422

1418

INTERFACE

1426

DISK STORAGE

1424

BUS

1442
OUTPUT ADAPTER(S)

OUTPUT DEVICE(S)

1440

1438
INTERFACE PORT(S)

INPUT DEVICE(S)

1436

1450
COMMUNICATION CONNECTION(S)

NETWORK INTERFACE

1448

REMOTE COMPUTER(S)

MEMORY STORAGE

1444

1446

FIG. 14

**FIG. 15**

EP 4 112 407 A1

**FIG. 16**

Europäisches
Patentamt

European
Patent Office

Office européen
des brevets

# EUROPEAN SEARCH REPORT

Application Number

EP 22 18 1549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 074 421 A2 (FUJI HEAVY IND LTD [JP]) 7 February 2001 (2001-02-07) | 1-3,5,9, 10,12,14 | INV. B60W30/12 |
| Y | * paragraphs [0015] - [0025], [0030] - [0035], [0057] - [0062] * | 4,6-8, 11,13,15 | B60W30/14 B60W30/18 B60W50/14 |
| Y | US 2017/369057 A1 (GURGHIAN ALEXANDRU MIHAI [US] ET AL) 28 December 2017 (2017-12-28) * paragraph [0034] * | 4,13 | |
| X | DE 10 2016 003026 A1 (DAIMLER AG [DE]) 29 September 2016 (2016-09-29) | 1,12 | |
| Y | * paragraphs [0007], [0017] - [0020] * | 6,11 | |
| Y | EP 1 659 367 A1 (HARMAN BECKER AUTOMOTIVE SYS [DE]) 24 May 2006 (2006-05-24) * paragraph [0034] * | 7,8,15 | |
| X | EP 2 537 727 A1 (VOLVO CAR CORP [SE]) 26 December 2012 (2012-12-26) * paragraphs [0023] - [0031] * | 1,12 | |
| X | US 2007/150157 A1 (LEE YONG H [US] ET AL) 28 June 2007 (2007-06-28) * paragraphs [0026] - [0035] * | 1,12 | TECHNICAL FIELDS SEARCHED (IPC) B60W G06V |
| A | CN 112 721 930 A (CHONGQING CHANGAN AUTOMOBILE CO LTD) 30 April 2021 (2021-04-30) * the whole document * | 1-15 | |
| A | CN 111 391 856 A (DONGFENG MOTOR CORP) 10 July 2020 (2020-07-10) * the whole document * | 1-15 | |

The present search report has been drawn up for all claims

| Place of search | Date of completion of the search | Examiner |
|---|---|---|
| Munich | 17 November 2022 | Nielles, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 1549

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2022

| Patent document cited in search report | | Publication date | Patent family member(s) | | Publication date |
|---|---|---|---|---|---|
| EP 1074421 | A2 | 07-02-2001 | EP 1074421 | A2 | 07-02-2001 |
| | | | EP 1733913 | A2 | 20-12-2006 |
| | | | JP 3167987 | B2 | 21-05-2001 |
| | | | JP 2001052298 | A | 23-02-2001 |
| | | | US 6778896 | B1 | 17-08-2004 |
| US 2017369057 | A1 | 28-12-2017 | CN 107545232 | A | 05-01-2018 |
| | | | DE 102017113572 | A1 | 28-12-2017 |
| | | | GB 2554120 | A | 28-03-2018 |
| | | | RU 2017121567 | A | 20-12-2018 |
| | | | US 2017369057 | A1 | 28-12-2017 |
| DE 102016003026 | A1 | 29-09-2016 | NONE | | |
| EP 1659367 | A1 | 24-05-2006 | AT 407345 | T | 15-09-2008 |
| | | | EP 1659367 | A1 | 24-05-2006 |
| | | | US 2006287817 | A1 | 21-12-2006 |
| EP 2537727 | A1 | 26-12-2012 | CN 102837703 | A | 26-12-2012 |
| | | | EP 2537727 | A1 | 26-12-2012 |
| | | | US 2012326856 | A1 | 27-12-2012 |
| US 2007150157 | A1 | 28-06-2007 | CN 101326425 | A | 17-12-2008 |
| | | | DE 112006003319 | T5 | 16-10-2008 |
| | | | US 2007150157 | A1 | 28-06-2007 |
| | | | WO 2007070160 | A2 | 21-06-2007 |
| CN 112721930 | A | 30-04-2021 | NONE | | |
| CN 111391856 | A | 10-07-2020 | NONE | | |

EPO FORM P0459

For more details about this annex : see Official Journal of the European Patent Office, No. 12/82